# FASCICULE DE BREVET EUROPEEN

(11) **EP 1 600 726 B1**
(45) Date de publication et mention de la délivrance du brevet: **19.03.2014**
(21) Numéro de dépôt: 05291110.4
(22) Date de dépôt: 24.05.2005
(51) Int. Cl.: G01S 5/16

(54) **Procédé et système d'harmonisation de détecteurs de posture**
Verfahren und System für Harmonisierung von Anzeiger der Körperlage
Method and system for harmonizing posture detectors

(30) Priorité: 24.05.2004 FR 0405564; 24.06.2004 FR 0406896
(43) Date de publication de la demande: 30.11.2005
(73) Titulaire: Sagem Défense Sécurité, 92100 Boulogne-Billancourt (FR)
(72) Inventeur: Bocquiault, Pierre, 75020 Paris (FR); Patry, Philippe, 92260 Fontenay aux Roses (FR)
(74) Mandataire: Regimbeau

(56) Documents cités:
- EP-A1- 0 745 827
- EP-A1- 1 340 999
- WO-A1-00/52563
- US-A- 4 111 555
- US-B1- 6 377 401

## Description

### DOMAINE TECHNIQUE GENERAL

La présente invention concerne une technique d'harmonisation de détecteurs de posture.

Plus précisément, elle concerne une technique d'harmonisation des caméras de détection de posture d'un viseur de casque dans un avion.

### ETAT DE L'ART

Dans les avions de combat équipés d'un viseur de casque, le pilote possède un casque comportant une visière sur laquelle on projette des renseignements concernant l'avion et sa situation dans son environnement. Le pilote a ainsi à tout moment et facilement les informations dont il a besoin. Dans un avion de combat biplace, les deux équipiers sont équipés chacun d'un tel viseur de casque.

On projette également sur la visière du casque un graphique ou un réticule permettant à un pilote de désigner une cible par simple mouvement de la tête. Un système électronique dans l'avion retrouve la posture du casque - c'est à dire sa position et son orientation - par rapport à l'avion, et peut ensuite, sur action du pilote ou du tireur, lancer un projectile sur la cible désignée.

On comprend que la posture du casque par rapport à l'avion doit être déterminée avec précision pour que la cible puisse être atteinte par le projectile. L'orientation doit être connue avec une précision de l'ordre de quelques milliradians dans les trois angles, et la position avec une précision de l'ordre de quelques fractions de millimètres.

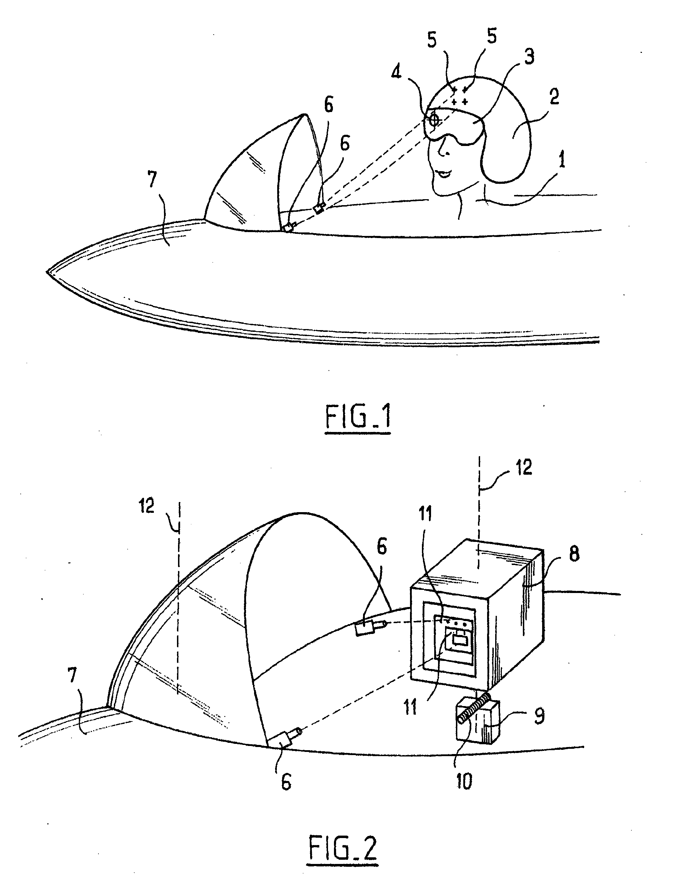

La figure 1 montre que la posture d'un casque 2 d'un pilote 1 est déterminée par au moins deux caméras 6 - également appelées détecteurs de posture - fixées à distance l'une de l'autre dans la cabine de pilotage de l'avion 7, afin d'avoir une vision du casque 2 dans toutes ses attitudes possibles. Les caméras 6 sont à capteur solide CMOS (Complementary Metal-Oxide Semiconductor) ou CCD (Charge-Coupled Device). Elles observent un ensemble de diodes électroluminescentes 5 (DEL) infrarouges et fixées sur le casque 2. Les diodes 5 forment une géométrie connue sur le casque 2. L'observation des diodes 5 par les caméras 6 et l'évolution de leur image par les caméras 6 en fonction des mouvements du casque permet de déterminer la posture du casque 2 par rapport aux caméras 6. La position des caméras 6 par rapport à l'avion 7 est par ailleurs connue, et on peut en déduire la posture du casque 2 par rapport à l'avion 7.

Pour déterminer la posture du casque 2 par rapport aux caméras 6 de l'observation des diodes 5, puis en déduire sa posture par rapport à l'avion 7, il faut effectuer, lors d'une phase de montage ou de maintenance des caméras 6, ce que l'homme du métier appelle une « harmonisation » des caméras 6 ou des détecteurs de posture.

A cet effet, la figure 2 montre que l'on fixe un panneau 8 de diodes 11, le panneau 8 étant étalonné et monté sur un théodolite 9 - un instrument de visée muni d'une lunette 10 et qui sert principalement à mesurer précisément des angles horizontaux et verticaux. Les diodes 11 sont préférentiellement électroluminescentes et infrarouges.

Le panneau 8 est disposé à l'emplacement approximatif du casque du pilote. Il définit un trièdre trirectangle car les diodes 11 sont disposées en carré sur quatre niveaux de profondeurs différentes dans le panneau 8. La multiplicité des diodes 11 sur chaque axe du trièdre accroît la précision de définition des axes. Le panneau 8 est monté mobile en gisement et en site par rapport à l'avion. Le panneau 8 forme ainsi une mire dont on peut mesurer les déplacements et positions en site et en gisement, grâce au théodolite 9.

Dans la suite de la présente description, on appelle « outillage » l'ensemble formé par le panneau 8 et le théodolite 9.

Lors d'une phase d'étalonnage, l'outillage et l'avion - et donc les caméras 6 - sont alignés sur un repère local, dit « géographique ».

A cet effet, l'avion est mis à l'horizontale du lieu, perpendiculaire à la verticale 12 définie par la gravité et visible sur la figure 2, grâce à des vérins par exemple. De même, l'axe vertical de l'outillage est confondu avec la verticale locale.

On définit de plus le plan vertical de gisement nul comme le plan dans lequel l'avion et l'outillage sont alignés sur un même point de repère lointain.

On définit alors un axe longitudinal comme un axe confondu avec l'horizontale locale et dans le plan vertical de gisement nul. L'axe transversal de l'outillage est alors sur l'axe transversal de l'avion, par construction de l'outillage.

La mise en place de l'outillage par rapport au repère géographique s'effectue grâce à un niveau à bulle intégré au théodolite 9 et grâce à la lunette 10 dudit théodolite.

Une fois l'alignement de l'outillage effectué, le panneau 8 est observé simultanément par les deux caméras 6 et son orientation par rapport au repère géographique - et donc par rapport à l'avion - est connue avec précision par le théodolite 9. Le panneau 8 est présenté aux deux caméras 6 sous plusieurs postures, mesurées par le théodolite 9.

Lors de ces opérations, les mêmes postures du panneau 8 de diodes sont mesurées :
- par rapport à l'avion, grâce au théodolite 9,
- et par rapport à chaque caméra 6, grâce à l'analyse des images.
Ceci permet de localiser implicitement les caméras 6 par rapport à l'avion. Cette localisation servira à la détermination de posture lors de l'observation des diodes 5 du casque 2 d'un pilote par les caméras 6 harmonisées lors d'une mission.

La technique d'harmonisation précédente présente des inconvénients.

L'avion doit être mis à l'horizontale, généralement sur des vérins. Cette opération est longue et fastidieuse.

De plus, elle est impraticable lors d'une maintenance sur un porte-avion par exemple, du fait des mouvements du navire. La verticale du lieu ne correspond plus en effet à l'axe haut-bas de l'avion.

EP-745 827-A1 divulgue un procédé selon le préambule de la revendication 1.

### PRESENTATION DE L'INVENTION

L'invention propose d'éliminer ces inconvénients.

Un des buts de l'invention est de proposer une technique d'harmonisation qui soit plus rapide et plus facile.

Un des buts de l'invention est notamment de proposer une technique d'harmonisation qui n'utilise pas de mise à l'horizontale de l'avion, par exemple sur des vérins.

Un des autres buts de l'invention est de proposer une technique d'harmonisation qui puisse être pratiquée partout, notamment sur des porte-avions en mission.

A cet effet, l'invention propose un procédé d'harmonisation de détecteurs de posture d'un objet selon la revendication 1.
L'invention est avantageusement complétée par les caractéristiques reprises dans les revendications dépendantes.

Les techniques selon l'invention présentent de nombreux avantages.

Elle facilite l'harmonisation des détecteurs en diminuant les interventions humaines, notamment car il n'est pas besoin d'utiliser des vérins, tout en améliorant la précision de l'harmonisation. La précision de l'harmonisation dépend principalement de la précision de construction du réticule ou des diodes de la cible, et du mât support de cette cible.

Elle permet un recalibrage ou un remplacement des détecteurs de posture ou de leur support en mer, lorsque la surface portant l'avion n'est plus horizontale.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1, déjà commentée, représente schématiquement la disposition de détecteurs de posture d'un casque d'un pilote d'avion ;
- la figure 2, déjà commentée, représente schématiquement la disposition d'un outillage d'harmonisation de détecteurs de posture dans une cabine d'un avion ;
- la figure 3 représente schématiquement un premier cas d'utilisation d'un système selon l'invention ;
- la figure 4 représente schématiquement un deuxième cas d'utilisation d'un système selon l'invention une cible étant fixée sur un mât apte à être monté sur une référence mécanique ;
- la figure 5 représente schématiquement un troisième cas d'utilisation d'un système selon l'invention comportant un renvoi optique ;
- la figure 6 montre un exemple non limitatif d'un montage du système selon l'invention conforme à la figure 5 dans le cas d'un avion ;
- la figure 7 représente schématiquement un quatrième cas d'utilisation d'un système selon l'invention dans le cas non limitatif d'un avion ; et
- la figure 8 représente schématiquement un cas d'utilisation dans lequel la mire est observée par une caméra placée sur le mât, mât qui est lui-même fixé sur la référence mécanique d'un avion.

Sur l'ensemble des figures, les éléments similaires portent des références numériques identiques.

### DESCRIPTION DETAILLEE

Les développements qui suivent s'appliquent avantageusement à une technique d'harmonisation de détecteurs de posture d'un viseur d'un casque d'un pilote d'un avion, notamment de combat. On comprend que l'invention s'applique également à une technique d'harmonisation de détecteurs de posture d'un objet quelconque par rapport à des détecteurs quelconques dans un véhicule quelconque, par exemple une voiture, un char d'assaut, un hélicoptère, etc.

L'invention reprend ainsi le principe général de la technique de l'art antérieur d'harmonisation de détecteurs de posture d'un objet par rapport auxdits détecteurs. Le but de l'harmonisation est de localiser lesdits détecteurs de posture par rapport au véhicule hôte, par le moyen d'un outillage lui-même référencé par rapport à ce véhicule.

Dans les développements qui suivent, l'électronique et les algorithmes mis en jeu lors de l'harmonisation sont ceux qui sont utilisés pour la détermination de la posture d'un objet observé par les détecteurs en opération. A partir d'une image en deux dimensions obtenue par l'observation d'une mire sur l'objet, on obtient une posture en trois dimensions de l'objet.

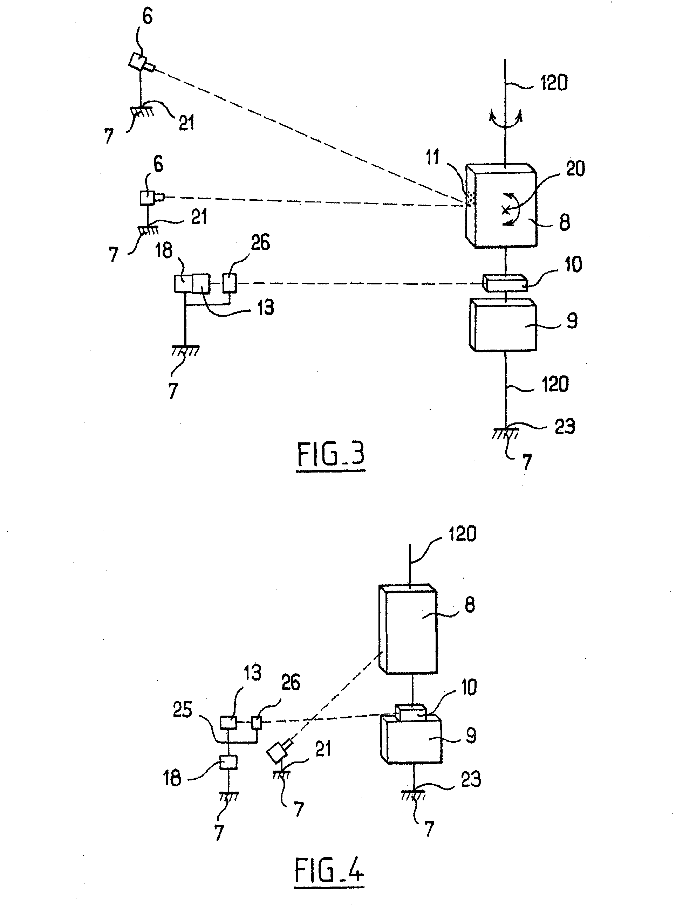

Comme le montre la figure 3, l'invention comporte une étape d'observation d'une mire 8 par au moins deux détecteurs 6 de posture. Dans le cas non limitatif d'un véhicule 7 étant un avion, la mire 8 est fixée sensiblement à la place de la tête du pilote grâce à des moyens de fixation 23. Les détecteurs 6 sont situés dans le véhicule 7 grâce aux moyens de fixation 21

Avantageusement, la mire 8 est un panneau de diodes 11 (DEL) dans le proche infrarouge et qui définit un trièdre trirectangle de diodes 11, les diodes étant disposées en carré sur préférentiellement quatre niveaux de profondeurs différentes dans le panneau 8. On peut bien entendu prévoir d'autres dispositifs de mire 8.

Les détecteurs 6 sont des caméras optroniques à capteur solide CMOS (Complementary Metal-Oxide Semiconductor) ou CCD (Charge-Coupled Device).

La mire 8 est montée mobile en gisement par rapport à un axe 120 d'orientation haut-bas. Contrairement à la technique d'harmonisation employée dans l'art antérieur, l'axe haut-bas 120 d'un système selon l'invention n'est pas confondu avec l'axe de la verticale du lieu. Il ne correspond pas à un axe confondu avec la direction de la gravité. L'orientation haut-bas de l'axe 120 est repérée par rapport à une référence mécanique 18 comme décrit plus en détails dans la suite de la description.

La mire 8 est montée mobile en site par rapport à un axe 20 perpendiculaire à l'axe d'orientation haut-bas 120.

Les angles de position et de déplacement en site et en gisement de la mire 8 sont mesurés par un goniomètre deux axes 9 monté sur l'axe 120. Le goniomètre 9 comporte avantageusement une lunette 10 de visée.

Le terme « outillage » fait référence dans la suite de la présente description à l'ensemble comportant la mire 8 et le goniomètre 9.

L'invention consiste principalement à effectuer une phase d'étalonnage selon laquelle l'outillage est aligné par rapport à la référence mécanique 18. Ainsi, contrairement à la technique de l'art antérieur, on n'a plus besoin d'aligner l'outillage par rapport à la verticale du lieu dans un repère géographique.

Un premier procédé selon l'invention comporte une étape consistant à étalonner l'attitude de la mire 8 dans un repère du véhicule en alignant la mire 8 par rapport à une cible 13 dont la position est connue par rapport à la référence mécanique 18 du véhicule.

Dans le cas où la référence mécanique 18 est visible depuis la lunette 10 du goniomètre 9, on peut effectuer l'alignement de l'outillage par rapport à la référence 18 en plaçant une cible 13 sur ladite référence 18.

Avantageusement, la cible 13 comporte au moins un réticule lumineux. Les positions des différents réticules de la cible 13 sont précisément connues entre elles, et par rapport à la référence 18. Très avantageusement encore, l'image de la cible 13 est collimatée par un collimateur 26 monté à proximité de la cible 13 pour apparaître à l'infini depuis la lunette 10.

On observe l'image de la cible 13 collimatée à travers la lunette 10. On règle l'axe vertical 120 de l'outillage pour qu'il soit parallèle à l'axe vertical de la cible 13, défini par au moins un réticule.

On définit de plus le plan vertical de gisement nul comme le plan contenant l'axe vertical de la cible 13 et l'axe 120 de l'outillage, qui ont été rendus parallèles.

On définit alors un axe longitudinal comme un axe à la fois perpendiculaire à l'axe 120 et situé dans le plan vertical de gisement nul. L'axe transversal de l'outillage est alors parallèle à l'axe transversal passant par la référence 18, par construction de l'outillage. De préférence, l'image de la cible 13 est envoyée parallèlement à l'axe longitudinal.

Une fois l'étalonnage effectué, on peut mesurer les différentes postures de la mire 8 en site et en gisement grâce au goniomètre 9. On repère chaque angle en site et en gisement de la mire 8 par rapport au repère de l'outillage 8-9-10 qui a été aligné, comme susdit, sur la cible 13 fixée sur la référence mécanique 18. Les attitudes de la mire sont repérées par rapport aux détecteurs 6 en analysant les images. En lisant le goniomètre, elles sont aussi repérées par rapport au repère outillage, lui-même aligné sur la référence 18. Les détecteurs 6 sont ainsi localisés par rapport au véhicule.

Les développements qui précèdent s'appliquent avantageusement au cas où la référence mécanique 18 est visible par la lunette 10 du goniomètre 9. II s'agit par exemple d'une référence 18 prise sur l'empennage d'un avion, l'outillage étant placé dans la cabine de pilotage de l'avion.

On peut également prendre comme référence mécanique 18 un point non visible directement par la lunette 10. Il s'agit par exemple d'une référence, toujours dans le cas d'un avion, prise sur la fixation du radar en nez de l'avion ou dans la soute de l'avion.

Dans ce cas, qui est représenté schématiquement à la figure 4, la cible 13 est fixée sur un mât 25 apte à être monté sur la référence mécanique 18, et qui permet de disposer la cible 13 au niveau de la lunette 10.

On peut alors effectuer comme précédemment d'une part l'alignement de l'outillage par rapport à la référence 18 par l'intermédiaire de la cible 13 et d'autre part effectuer les mesures de chaque angle en site et en gisement de la mire 8 en vue de la localisation des détecteurs. En effet, les caractéristiques du mât 25 par rapport à la référence 18 sont parfaitement connues, notamment dans le cas où la référence 18 est la fixation du radar en nez de l'avion ou dans la soute de l'avion. Ces points sont définis très précisément dans un avion car ils concernent la fixation du radar ou l'emplacement de la centrale inertielle de l'avion.

Les cas qui précèdent sont des cas où l'observation de la cible 13 s'effectue en visée directe.

On peut également prévoir des cas où l'observation de la cible 13 s'effectue en visée indirecte, pour des commodités de montage de mât 25 ou des impératifs d'utilisation de la lunette 10.

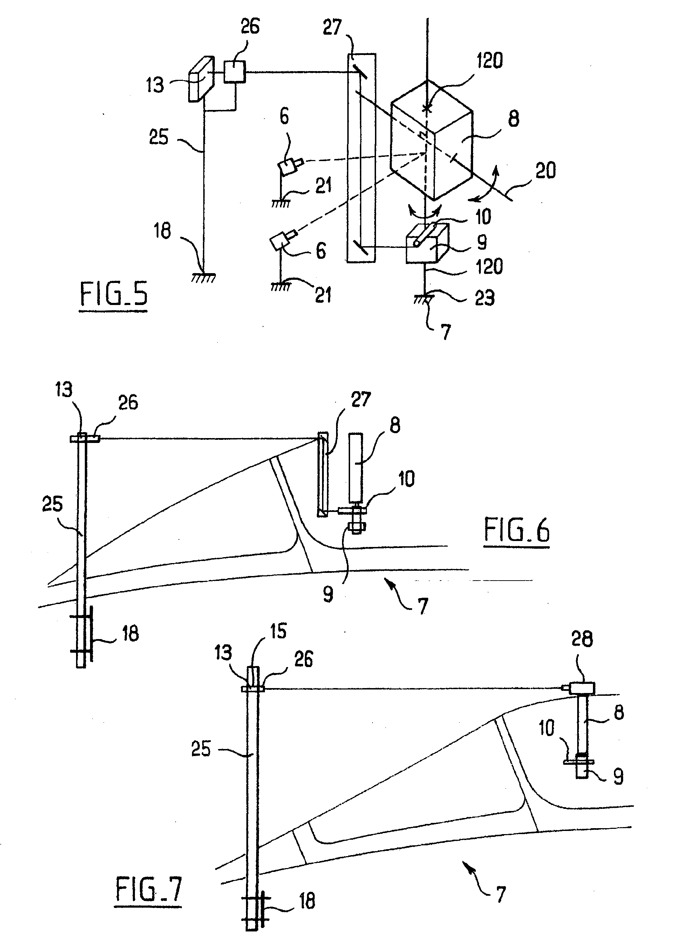

Ce cas est représenté schématiquement sur la figure 5. On place entre la cible 13 et la lunette 10 un renvoi optique 27, comportant par exemple des équerres optiques ou des rhombes pour que la lunette 10 puisse observer indirectement la cible 13 montée sur un mât 25.

La figure 6 montre un exemple non limitatif d'un montage du système selon l'invention conforme à la figure 5 dans le cas d'un avion, la cible 13 étant située sur un mât 25 monté sur la fixation du radar sur le nez de l'avion.

On précise que le déroulement de l'harmonisation dans le cas de systèmes d'observation indirecte conformes aux figures 5 et 6 reste identique au déroulement de l'harmonisation en observation directe. La seule différence est qu'on observe la cible 13 par la lunette 10 à travers le renvoi optique 27 qui renvoie un faisceau optique émergent parallèle au faisceau incident.

Dans un autre cas de technique selon l'invention, le goniomètre 9 ne comporte pas de lunette et/ou on peut choisir de monter un autre dispositif d'observation optique de la cible 13.

Ce cas est représenté schématiquement sur la figure 7, dans le cas non limitatif d'un avion.

Un dispositif 28 d'observation optique de la cible est monté au-dessus de la mire 8 pour une observation en direct de la cible 13 collimatée, la cible étant montée sur le mât 25.

Le dispositif 28 peut être une lunette optique.

Préférentiellement, le dispositif 28 est une caméra optronique. On peut ainsi obtenir un traitement numérique de l'image de la cible 13 pour affiner la mesure en utilisant les coordonnées de l'image de la cible. Dans ce cas, la cible 13 comporte au moins un réticule lumineux ou un ensemble de diodes 15 électroluminescentes formant une géométrie connue. Les positions des diodes de la cible 13 sont connues les unes par rapport aux autres.

Le dispositif 28 est solidaire de la mire 8, et sa position par rapport aux diodes de la mire 8 est précisément mesurée en analysant les images fournies par la caméra 28.

Les développements qui précèdent concernent donc, soit une cible vue à l'infini grâce à un collimateur par une lunette ou une caméra solidaires de la mire 8, soit une cible constituée de diodes vue par une caméra 28 également solidaire de la mire 8.

Dans ce second cas, les diodes 15 de la cible 13 sont en configuration précisément connue, de sorte qu'un traitement de l'image de la cible 13 fournie par la caméra de visée solidaire de la mire 8 permet de retrouver l'attitude de ladite caméra par rapport aux diodes 15, et donc l'attitude de la mire par rapport au repère du véhicule 7.

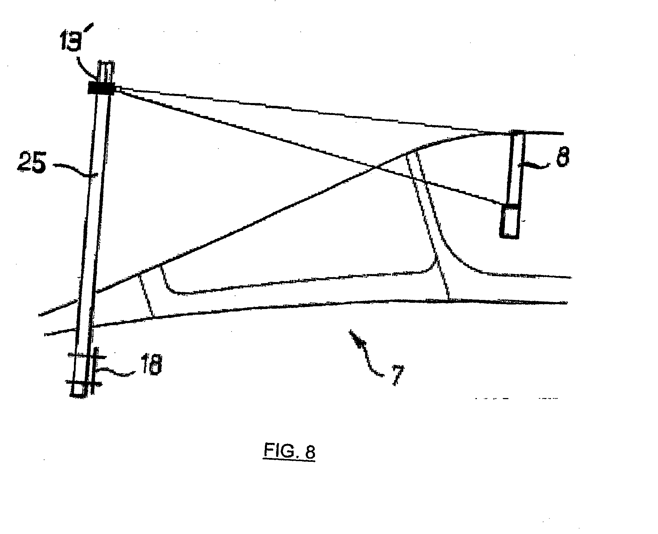

Un deuxième procédé possible selon l'invention, dont une mise en oeuvre est schématiquement représentée à la figure 8, comporte une étape consistant à étalonner l'attitude de la mire 8 dans un repère du véhicule 7 en alignant la mire 8 par rapport à une caméra optronique 13'. La position de la caméra 13' est connue par rapport à la référence mécanique 18 du véhicule. La mire 8 de la figure 8 est identique à celle des autres figures, sa description n'est donc pas reprise en détail.

Préférentiellement, la référence mécanique 18 est prise sur la fixation du radar en nez de l'avion ou dans la soute de l'avion.

On fixe alors un mât 25 sur la référence 18. Comme le montre la figure 8, la mire 8 peut-être observée depuis le mât 25 par la caméra optronique 13' fixée sur ce dernier. Dans ce cas, la caméra optronique 13' est solidaire dudit mât 25 et remplace la cible des figures précédentes. La mire 8 est placée comme précédemment sensiblement à la place de la tête du pilote.

La caméra 13' observe la mire 8. Elle est calibrée de sorte que ses paramètres sont connus et de sorte que l'on puisse étalonner son repère géométrique - et donc celui du véhicule puisqu'elle est fixée sur la référence mécanique 18 - avec celui de la mire 8. Un tel étalonnage s'effectue par analyse de l'image qu'elle fournie de la mire 8. Un traitement de l'image de la mire 8 fournie par la caméra 13' permet de retrouver l'attitude de la mire par rapport au repère du véhicule 7. On n'utilise pas lors de l'étalonnage le goniomètre ni sa lunette.

On comprend qu'une fois l'étalonnage effectué, on peut directement mesurer les différentes postures de la mire 8 en site et en gisement par analyse de l'image de la mire donnée par les caméras 6. On n'utilise plus ici la caméra 13'. On repère chaque angle en site et en gisement de la mire 8 par rapport aux détecteurs 6 - identiques aux détecteurs décrits précédemment. Comme on connaît la position de la mire par rapport au véhicule, par transitivité les détecteurs 6 sont localisés par rapport au véhicule.

## Revendications

1. Procédé d'harmonisation de détecteurs (6) de posture d'un objet (2) par rapport auxdits détecteurs, les détecteurs étant situés dans un véhicule (7), le procédé comportant
- une étape d'alignement, préalable à la localisation des détecteurs, consistant à étalonner l'attitude d'une mire (8) dans un repère du véhicule (7), en alignant la mire (8) par rapport à un corps (13, 13') dont la position est connue par rapport à une référence mécanique (18) du véhicule (7),
- une étape consistant à localiser lesdits détecteurs (6) par rapport au véhicule (7) en leur présentant, dans différentes postures, la mire (8) ainsi étalonnée,
le procédé étant **caractérisé en ce que**,
pour aligner la mire (8) par rapport au corps (13, 13'), soit
on effectue une observation optique du corps (13), comportant un réticule, à partir d'un dispositif optique (10, 28) solidaire de la mire (8), et
on règle un axe vertical (120) du dispositif optique (10, 28) et de la mire (8) pour qu'il soit parallèle à un axe vertical du réticule du corps (13),
un plan vertical de gisement nul étant défini comme un plan contenant à la fois l'axe vertical du réticule du corps (13) et l'axe vertical du dispositif optique (10, 28) et de la mire (8), et
un axe longitudinal étant défini comme un axe à la fois perpendiculaire à l'axe vertical de la mire (8) et situé dans le plan vertical de gisement nul ; soit
on effectue une observation optronique
du corps (13) comportant un réticule ou une géométrie connue, à partir d'une caméra (28) optronique solidaire de la mire (8), ou
de la mire (8) définissant un trièdre, à partir d'une caméra optronique solidaire du corps (13'), la position de la caméra (13') étant connue par rapport à une référence mécanique (18) du véhicule (7) ; et
on traite l'image du corps (13) ou l'image de la mire (8) fournie par la caméra optronique pour déterminer respectivement
l'attitude de la caméra (28) optronique solidaire de la mire (8), par rapport au corps (13), et donc déterminer l'attitude de la mire (8) par rapport au repère du véhicule (7), ou
l'attitude de la mire (8) par rapport au repère du véhicule (7).

2. Procédé selon la revendication 1, dans lequel le corps est une cible (13).

3. Procédé selon l'une des revendications 1 ou 2, **caractérisé en ce qu'**il comporte une étape consistant à aligner la mire (8) sur le repère du véhicule (7) par une observation optique de la cible (13), le dispositif optique d'observation étant solidaire de la mire (8).

4. Procédé selon l'une des revendications 1 ou 2, **caractérisé en ce qu'**il comporte une étape consistant à aligner la mire (8) sur le repère du véhicule (7) par une observation de la cible (13) par une caméra optronique (14), la caméra (14) d'observation étant solidaire de la mire (8) et la cible comportant des diodes électroluminescentes (15) ou un réticule collimaté.

5. Procédé selon l'une des revendications 1 à 4, **caractérisé en ce que** l'observation de la cible (13) s'effectue en visée directe.

6. Procédé selon l'une des revendications 1 à 4, **caractérisé en ce que** l'observation de la cible (13) s'effectue en visée indirecte.

7. Procédé selon l'une des revendications 1 à 6, **caractérisé en ce qu'**on fait passer l'image de la cible (13) par un collimateur (26).

8. Procédé selon l'une des revendications 4 à 7, **caractérisé en ce que**, lorsque l'image de la cible est non collimatée, on place les diodes (15) de la cible en configuration précisément connue, de sorte qu'un traitement de l'image de la cible (13) fournie par la caméra de visée solidaire de la mire (8) permette de retrouver l'attitude de ladite caméra par rapport aux diodes (15), et donc l'attitude de la mire par rapport au repère du véhicule (7).

9. Procédé selon la revendication 1, dans lequel le corps est une caméra optronique (13').

10. Procédé selon la revendication 9, comportant une étape consistant à aligner la mire (8) sur le repère du véhicule (7) par une observation de la mire (8) par la caméra optronique (13').

11. Procédé selon l'une des revendications 9 ou 10, dans lequel la position de la caméra (13') par rapport au véhicule (7) d'une part et les caractéristiques de la caméra (13') d'autre part sont précisément connues, de sorte qu'un traitement de l'image de la mire (8) fournie par la caméra (13') permette de retrouver l'attitude de la mire par rapport au repère de l'avion (7).

12. Procédé selon l'une des revendications 1 à 11, **caractérisé en ce que**, lorsque le véhicule (7) est un avion, le corps (13, 13') est fixé sur un mât (25) monté sur la fixation du radar en nez de l'avion, celle de la centrale inertielle en soute ou celle d'un capteur sur l'empennage de l'avion.

## Patentansprüche

1. Verfahren zum Abgleichen von Sensoren (6) für die Lage eines Objekts (2) bezüglich der Sensoren, wobei die Sensoren sich in einem Fahrzeug (7) befinden, wobei das Verfahren umfasst:
- einen Schritt der Ausrichtung, der vor der Lokalisierung der Sensoren erfolgt und darin besteht, die Stellung einer Visiereinrichtung (8) in einem Bezugspunkt des Fahrzeugs (7) zu vermessen, indem die Visiereinrichtung (8) bezüglich eines Körpers (13, 13') ausgerichtet wird, dessen Position bezüglich eines mechanischen Referenzpunkts (18) des Fahrzeugs (7) bekannt ist,
- einen Schritt, der darin besteht, die Sensoren (6) bezüglich des Fahrzeugs (7) zu lokalisieren, indem diesen die so vermessene Visiereinrichtung (8) in verschiedenen Lagen präsentiert wird,
wobei das Verfahren **dadurch gekennzeichnet ist, dass** zum Ausrichten der Visiereinrichtung (8) bezüglich des Körpers (13, 13') entweder
eine optische Betrachtung des ein Fadenkreuz enthaltenden Körpers (13) ausgehend von einer optischen Vorrichtung (10, 28) erfolgt, die fest mit der Visiereinrichtung (8) verbunden ist, und
eine vertikale Achse (120) der optischen Vorrichtung (10, 28) und der Visiereinrichtung (8) so eingestellt wird, dass sie parallel zu einer vertikalen Achse des Fadenkreuzes des Körpers (13) verläuft,
wobei eine vertikale Ebene mit Nullwinkel als eine Ebene definiert ist, die zugleich die vertikale Achse des Fadenkreuzes des Körpers (13) und die vertikale Achse der optischen Vorrichtung (10, 28) und der Visiereinrichtung (8) enthält, und
eine Längsachse als eine Achse definiert ist, die zugleich senkrecht zur vertikalen Achse der Visiereinrichtung (8) verläuft und in der vertikalen Ebene mit Nullwinkel liegt,
oder aber
eine optronische Betrachtung
des Körpers (13), der ein Fadenkreuz oder eine bekannte Geometrie aufweist, ausgehend von einer optronischen Kamera (28) erfolgt, die fest mit der Visiereinrichtung (8) verbunden ist, oder
der Visiereinrichtung (8), die ein Dreiflächensystem definiert, ausgehend von einer optronischen Kamera erfolgt, die fest mit dem Körper (13') verbunden ist, wobei die Position der Kamera (13') bezüglich eines mechanischen Referenzpunkts (18) des Fahrzeugs (7) bekannt ist; und
das Bild der Körpers (13) oder das Bild der Visiereinrichtung (8), das von der optronischen Kamera geliefert wird, verarbeitet wird, um
die Stellung der fest mit der Visiereinrichtung (8) verbundenen optronischen Kamera (28) bezüglich des Körpers (13) und damit die Lage der Visiereinrichtung (8) bezüglich des Bezugspunkts des Fahrzeugs (7) zu bestimmen, bzw.
die Stellung der Visiereinrichtung (8) bezüglich des Bezugspunkts des Fahrzeugs (7) zu bestimmen.

2. Verfahren nach Anspruch 1, wobei der Körper eine Zielscheibe (13) ist.

3. Verfahren nach einem der Ansprüche 1 oder 2, **dadurch gekennzeichnet, dass** es einen Schritt umfasst, der darin besteht, die Visiereinrichtung (8) auf den Bezugspunkt des Fahrzeugs (7) durch eine optische Betrachtung der Zielscheibe (13) auszurichten, wobei die optische Betrachtungsvorrichtung fest mit der Visiereinrichtung (8) verbunden ist.

4. Verfahren nach einem der Ansprüche 1 oder 2, **dadurch gekennzeichnet, dass** es einen Schritt umfasst, der darin besteht, die Visiereinrichtung (8) auf den Bezugspunkt des Fahrzeugs (7) durch eine Betrachtung der Zielscheibe (13) über eine optronische Kamera (14) auszurichten, wobei die Betrachtungskamera (14) fest mit der Visiereinrichtung (8) verbunden ist und die Zielscheibe Leuchtdioden (15) oder ein kollimiertes Fadenkreuz aufweist.

5. Verfahren nach einem der Ansprüche 1 bis 4, **dadurch gekennzeichnet, dass** die Betrachtung der Zielscheibe (13) in direkter Sichtverbindung erfolgt.

6. Verfahren nach einem der Ansprüche 1 bis 4, **dadurch gekennzeichnet, dass** die Betrachtung der Zielscheibe (13) in indirekter Sichtverbindung erfolgt.

7. Verfahren nach einem der Ansprüche 1 bis 6, **dadurch gekennzeichnet, dass** das Bild der Zielscheibe (13) über einen Kollimator (26) weitergeleitet wird.

8. Verfahren nach einem der Ansprüche 4 bis 7, **dadurch gekennzeichnet, dass** dann, wenn das Bild der Zielscheibe nicht kollimiert ist, Dioden (15) der Zielscheibe in genau bekannter Konfiguration eingesetzt werden, so dass eine Verarbeitung des Bildes der Zielscheibe (13), das von der fest mit der Visiereinrichtung (8) verbundenen Sichtkamera geliefert wird, es ermöglicht, die Stellung der Kamera bezüglich der Dioden (15) und damit die Stellung der Visiereinrichtung bezüglich des Bezugspunkts des Fahrzeugs (7) zu erhalten.

9. Verfahren nach Anspruch 1, wobei der Körper eine optronische Kamera (13') ist.

10. Verfahren nach Anspruch 9, umfassend einen Schritt, der darin besteht, die Visiereinrichtung (8) auf den Bezugspunkt des Fahrzeugs (7) durch Betrachtung der Visiereinrichtung (8) durch die optronische Kamera (13') auszurichten.

11. Verfahren nach einem der Ansprüche 9 oder 10, wobei die Position der Kamera (13') bezüglich des Fahrzeugs (7) einerseits und die Eigenschaften der Kamera (13') andererseits genau bekannt sind, so dass eine Verarbeitung des Bildes der Visiereinrichtung (8), das von der Kamera (13') geliefert wird, es ermöglicht, die Stellung der Visiereinrichtung bezüglich des Bezugspunkts des Flugzeugs (7) zu erhalten.

12. Verfahren nach einem der Ansprüche 1 bis 11, **dadurch gekennzeichnet, dass** dann, wenn das Fahrzeug (7) ein Flugzeug ist, der Körper (13, 13') an einen Mast (25) befestigt ist, der an der Befestigung des Radars an der Flugzeugnase, an der des Trägheitsnavigations-Leitwerks am Laderaum oder an der eines Sensors am Leitwerk des Flugzeugs montiert ist.

## Claims

1. Method for harmonising posture detectors (6) of an object (2) in relation to said detectors, the detectors being situated in a vehicle (7), the method comprising
- an alignment step, prior to the placement of the detectors, consisting of calibrating the attitude of a sight (8) in a frame of the vehicle (7), by aligning the sight (8) in relation to a body (13, 13') for which the position is known in relation to a mechanical reference (18) of the vehicle (7),
- a step consisting of placing said detectors (6) in relation to the vehicle (7) by presenting, in various postures, the calibrated sight (8) thereto,
the method being **characterised in that**,
in order to align the sight (8) in relation to the body (13, 13'), either
an optical observation of the body (13), comprising a reticle, is performed using an optical device (10, 28) rigidly connected to the sight (8), and
a vertical axis (120) of the optical device (10, 28) and the sight (8) is adjusted so as to be parallel with a vertical axis of the reticle of the body (13),
a zero bearing plane being defined as a plane containing both the vertical axis of the reticle of the body (13) and the vertical axis of the optical device (10, 28) and the sight (8), and
a longitudinal axis being defined as an axis both perpendicular to the vertical axis of the sight (8) and situated in the zero bearing plane; or
an optronic observation is performed
of the body (13) comprising a reticle or a known geometry, using an optronic camera rigidly connected to the sight (8), or
of the sight (8) defining a trihedron, using an optronic camera rigidly connected to the body (13'), the position of the camera (13') being known in relation to a mechanical reference (18) of the vehicle (7); and
the image of the body (13) of the image of the sight (8) provided by the optronic camera is processed to determine respectively
the attitude of the optronic camera (28) rigidly connected to the sight (8), in relation to the body (13), and thus determine the attitude of the sight (8) in relation to the frame of the vehicle (7), or
the attitude of the sight (8) in relation to the frame of the vehicle (7).

2. Method according to claim 1, wherein the body is a target (13).

3. Method according to any of claims 1 or 2, **characterised in that** it comprises a step consisting of aligning the sight (8) on the frame of the vehicle (7) by means of an optical observation of the target (13), the optical observation device being rigidly connected to the sight (8).

4. Method according to any of claims 1 or 2, **characterised in that** it comprises a step consisting of aligning the sight (8) on the frame of the vehicle (7) by observing the target (13) with an optronic camera (14), the observation camera being rigidly connected to the sight (8) and the target comprising light-emitting diodes (15) or a collimated reticle.

5. Method according to any of claims 1 to 4, **characterised in that** the observation of the target (13) is performed in direct line of sight.

6. Method according to any of claims 1 to 4, **characterised in that** the observation of the target (13) is performed in indirect line of sight.

7. Method according to any of claims 1 to 6, **characterised in that** the image of the target (13) is passed via a collimator (26).

8. Method according to any of claims 4 to 7, **characterised in that**, if the image of the target is not collimated, the diodes (15) of the target are positioned in a precisely known arrangement, such that processing of the image of the target (13) provided by the camera rigidly connected to the sight (8) is suitable for detecting the attitude of said camera in relation to the diodes (15), and thus the attitude of the sight in relation to the frame of the vehicle (7).

9. Method according to claim 1, wherein the body is an optronic camera (13').

10. Method according to claim 9, comprising a step consisting of aligning the sight (8) on the frame of the vehicle (7) by observing the sight (8) with the optronic camera (13').

11. Method according to any of claims 9 or 10, wherein the position of the camera (13') in relation to the vehicle (7), on one hand, and the features of the camera (13'), on the other, are precisely known, such that processing of the image of the sight (8) provided by the camera (13') is suitable for detecting the attitude of the sight in relation to the frame of the aircraft (7).

12. Method according to any of claims 1 to 11, **characterised in that**, if the vehicle (7) is an aircraft, the body (13, 13') is attached to a mast (25) mounted on the mount of the radar on the aircraft nose, that of the inertial measurement unit in the cargo hold or that of a sensor on the aircraft tail unit.
